(19) **Europäisches Patentamt**

**European Patent Office**

**Office européen des brevets**

(11) **EP 0 740 869 B1**

(12) **EUROPÄISCHE PATENTSCHRIFT**

(45) Veröffentlichungstag und Bekanntmachung des Hinweises auf die Patenterteilung:
**14.07.2004  Patentblatt 2004/29**

(21) Anmeldenummer: **95935854.0**

(22) Anmeldetag: **08.11.1995**

(51) Int Cl.7: **H04L 27/26**

(86) Internationale Anmeldenummer:
**PCT/DE1995/001541**

(87) Internationale Veröffentlichungsnummer:
**WO 1996/016493 (30.05.1996 Gazette 1996/25)**

(54) **VERFAHREN ZUR DIGITALEN FREQUENZKORREKTUR BEI MEHRTRÄGERÜBERTRAGUNGSVERFAHREN**

PROCESS FOR DIGITAL FREQUENCY CORRECTION IN MULTI-CARRIER TRANSMISSION PROCESSES

PROCEDE DE CORRECTION DE FREQUENCE NUMERIQUE POUR DES PROCESSUS DE TRANSMISSION A PORTEUSES MULTIPLES

(84) Benannte Vertragsstaaten:
**DE FR GB**

(30) Priorität: **23.11.1994  DE 4441566**

(43) Veröffentlichungstag der Anmeldung:
**06.11.1996   Patentblatt 1996/45**

(73) Patentinhaber: **ROBERT BOSCH GMBH
70442 Stuttgart (DE)**

(72) Erfinder: **BOLLE, Michael
D-31141 Hildesheim (DE)**

(56) Entgegenhaltungen:
**EP-A- 0 653 858**

• **PROCEEDINGS OF THE 44TH IEEE VEHICULAR TECHNOLOGY CONFERENCE, 8. - 10.Juni 1994 NEW YORK, US, Seiten 1843-1845, ENGSTROM & ÖSTEBERG 'A SYSTEM FOR TEST OF MULTIACCESS METHODS BASED ON OFDM'**

**Beschreibung**

Stand der Technik

Die Erfindung geht aus von einem Verfahren zur Frequenzkorrektur bei Mehrträgerübertragungsverfahren nach der Gattung des Hauptanspruchs. Es ist aus der Druckschrift US 5 228 025 bereits ein Verfahren zur Frequenzkorrektur bei Mehrträgerübertragungsverfahren bekannt, wobei das empfangene Signal bandpaßgefiltert wird und anschließend über eine Mischung mit einer vorgegebenen Oszillatorfrequenz in das Basisband frequenzverschoben, abschließend gefiltert und digital gewandelt wird. Das digitale Signal wird daraufhin einer digitalen Fouriertransformation unterzogen und zur weiteren Decodierung ausgegeben. Eine genaue Fouriertransformation erfordert eine genaue Kenntnis der Sendefrequenz, mit der das Trägersignal ausgestrahlt wird, um die Oszillatorfrequenz darauf abzustimmen. Das von der digitalen Fouriertransformation ausgegebene Signal wird auf eine Abweichung der Trägerfrequenz des Trägersignals in bezug auf die vorgegebene Oszillatorfrequenz untersucht und es werden Steuerwerte ermittelt, mit Hilfe derer eine automatische Frequenzkorrektur des Oszillators durchgeführt wird. Auf diese Weise wird eine im ausgewerteten Signal erkennbare Frequenzabweichung zwischen der Frequenz des Trägersignals und der Frequenz des Oszillators durch die Nachregelung des Oszillators korrigiert.

vorteile der Erfindung

Die erfindungsgemäße Anordnung mit den Merkmalen des Hauptanspruchs hat demgegenüber den Vorteil, daß eine automatische Frequenzkorrektur der Oszillatorfrequenz nicht notwendig ist, sondern die ermittelte Frequenzverschiebung direkt bei der Fouriertransformation berücksichtigt wird. Auf diese Weise wird ein einfaches und sicheres Verfahren gewährleistet, um eine frequenzgenaue Demodulation bei Mehrträgerübertragungsverfahren durchführen zu können.

Durch die in den Unteransprüchen aufgeführten Maßnahmen sind vorteilhafte Weiterbildungen und Verbesserung des im Hauptanspruch angegebenen Verfahrens möglich. Besonders vorteilhaft ist es, zur Berechnung der modifizierten diskreten Fouriertransformation einen schnellen Algorithmus zu verwenden.

Eine weitere Verbesserung des erfindungsgemäßen Verfahrens beruht darin, modifizierte Drehfaktoren, die in einer Tabelle abgespeichert sind, aus der Tabelle auszulesen. Auf diese Weise kann schnell und problemlos auf die benötigten Drehfaktoren zugegriffen werden.

Eine vorteilhafte Anwendung des erfindungsgemäßen Verfahrens besteht in der digitalen Rundfunkübertragung.

Zeichnung

Ein Ausführungsbeispiel der Erfindung ist in der Zeichnung dargestellt und in der nachfolgenden Beschreibung näher erläutert.

Es zeigen

Figur 1 schematisch ein Mehrträgerubertragungsverfahren,
Figur 2 einen Empfänger für ein Mehrträgerübertragungsverfahren und
Figur 3 eine schematische Darstellung des Verfahrens zur Ermittlung von Drehfaktoren.

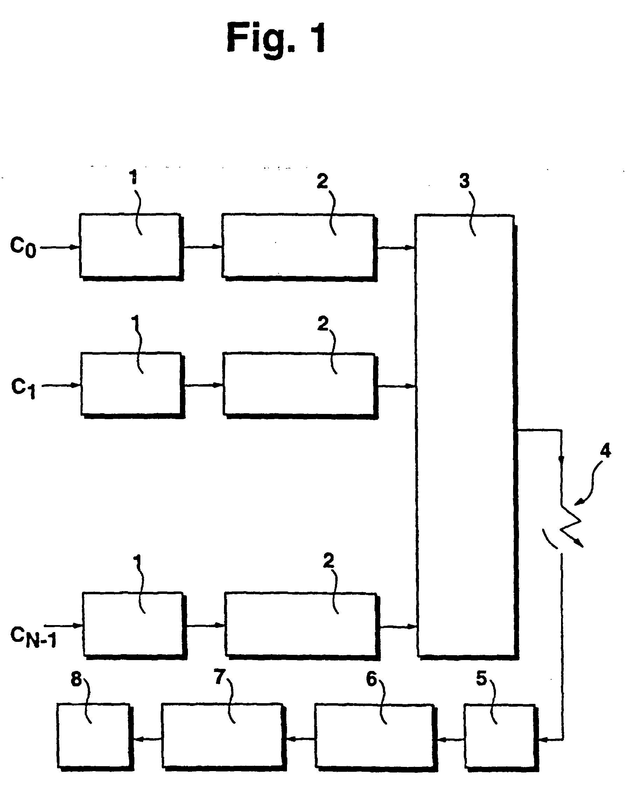

Figur 1 zeigt schematisch ein Verfahren zur Übertragung digitaler Daten, insbesondere für ein Rundfunkübertragungsverfahren mit einer hohen Bitrate für mobile Empfänger. Dieses Verfahren wird z.B. beim digitalen Hörrundfunk (DAB) mittels eines Mehrträgerübertragungsverfahrens nach dem Orthagonal Frequency Division Multiplexing Verfahren (OFDM) durchgeführt. Dabei werden, wie in Figur 1 dargestellt ist, mehrere Signalkanäle C0, C1,..., Cn-1 parallel jeweils einem Faltungsencoder 1 zugeführt. Der Faltungsencoder 1 führt eine Faltungsencodierung des zugeführten Signales durch. Anschließend werden die Kanäle einer Zeit-Frequenz-Verwürfelungseinheit 2 zugeführt. Die Zeit-Frequenz-Verwürfelungseinheit führt eine Zeit- und Frequenzverwürfelung des zugeführten Signals durch. Durch die Zeit- und Frequenzverwürfelung wird eine statistische Unabhängigkeit der Kanäle in bezug auf Raleigh-Prozesse und in bezug auf die Kanaleigenschaften erreicht. Anschließend werden die Signale der verschiedenen Kanäle C0,...Cn-1 in einer Recheneinheit 3 einem Zeitmultiplexverfahren und einer Trägermodulation mittels des Orthogonal Frequency Division Multiplexing Verfahrens (OFDM) unterworfen. Auf diese Weise wird ein Signal erhalten, das zeitlich verschachtelt ist und mehrere Trägersignale mit verschiedenen Frequenzen aufweist.

In der Recheneinheit 3 wird den zu übertragenen Daten ein Synchronisationssymbol hinzugefügt, das die Ermittlung der Zeit, der Frequenz und der Phase erlaubt, mit denen die empfangenen Daten ausgesendet werden. Dieses Verfahren ist bekannt und z.B. in der Druckschrift DE 41 28 713 beschrieben.

Daraufhin werden die Trägersignale über eine Übertragungsstrecke 4 zu einem Empfänger übertragen. Im Empfänger wird eine Filterung und eine Verschiebung ins Basisband 5, eine Demodulation 6, eine Zeit-Frequenz-Entwürfelung 7, d.h. die Verwürfelung wird rückgängig gemacht, und eine Decodierung 8 durchgeführt.

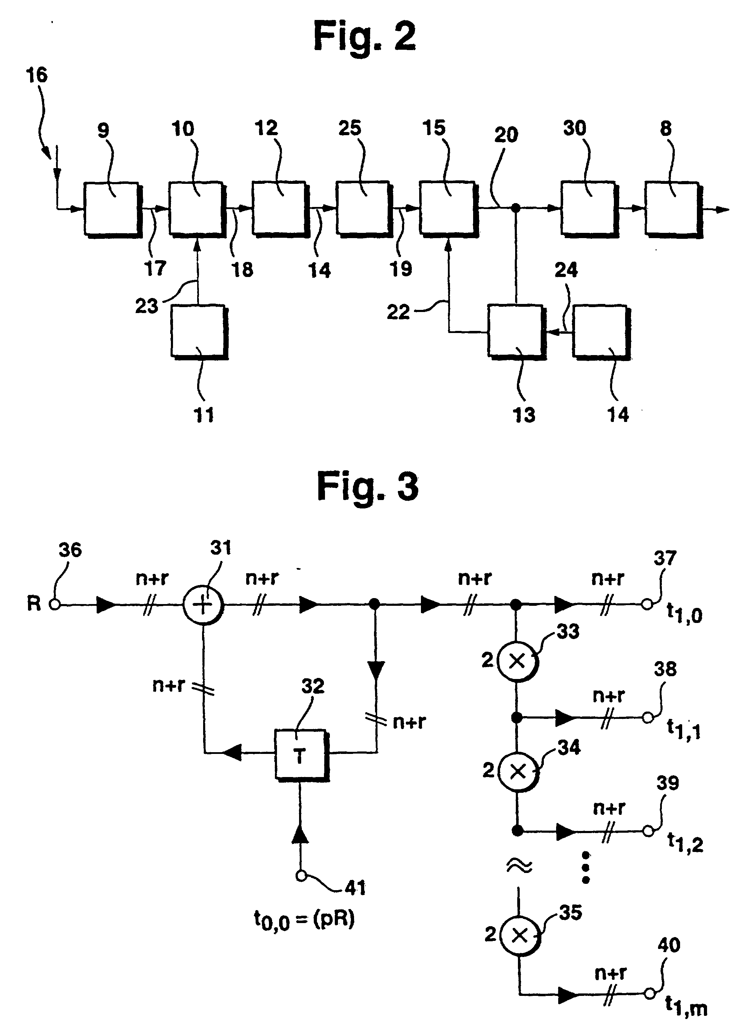

Figur 2 zeigt einen Empfänger, der anhand eines speziellen Ausführungsbeispiels das erfindungsgemäße Verfahren mit einer digitalen Frequenzkorrektur durchführt.

Eine Antenne 16 ist mit einem Bandpaßfilter 9 verbunden. Das Bandpaßfilter 9 ist über eine erste Signalleitung 17 mit einem Mischer 10 verbunden. An den Mischer 10 ist über eine siebte Signalleitung 23 ein freilaufender Oszillator 11 angekoppelt. Der Ausgang des Mischers 10 ist über eine zweite Signalleitung 18 mit einem Eingang eines Filters 12 verbunden. Der Ausgang des Filters 12 ist über eine dritte Signalleitung 14 mit einem Eingang eines A/D-Wandlers 25 verbunden. Der Ausgang des A/D-Wandlers 25 ist über eine neunte Signalleitung 19 mit dem Eingang einer Fourier-Transformationseinheit 15 verbunden. Der Ausgang der Fourier-Transformationseinheit 15 ist über eine vierte Signalleitung 20 an einen Eingang einer Demodulations- und Zeit-/Frequenzentwürfelungseinheit 30 angeschlossen. Der Ausgang der Demodulations- und Zeit-/Frequenzentwürfelungseinheit 30 ist an den Eingang eines Kanaldecoders 8 geführt. Von der vierten Signalleitung 20 ist eine fünfte Signalleitung 21 zu einem Eingang einer Recheneinheit 13 geführt. Die Recheneinheit 13 ist über eine achte Signalleitung 24 mit einem Speicher 14 verbunden. Ein Ausgang der Recheneinheit 13 ist über eine sechste Signalleitung 22 mit einem Dateneingang der Fourier-Transformationseinheit 15 verbunden. Der Empfänger nach Figur 2 funktioniert wie folgt:

Über die Antenne 16 wird ein von der Zeitmultiplex- und Modulationseinheit 3 ausgegebenes Signal empfangen und an den Bandpaß 9 weitergegeben. Der Bandpaß 9 führt eine Bandpaßfilterung des empfangenen Signals durch und gibt das gefilterte Signal an den Mischer 10 weiter. Im Mischer 10 wird das gefilterte Signal mit einer vom Oszillator 11 vorgegebenen Frequenz gemischt und somit das empfangene Signal in den Bandpaßbereich in einem festgelegten Abstand zu der Mittenfrequenz es abzutastenden Bandpaßsignals frequenzverschoben. Die Frequenz des Oszillators entspricht ungefähr der Trägerfrequenz, mit der das Signal übertragen wird. Das frequenzverschobene Signal wird daraufhin durch das Filter 12 gefiltert und anschließend einer A/D-Wandlung unterzogen. Das digitalisierte Signal, das ein komplexes Basissignal darstellt, wird daraufhin in der Fourier-Transformationseinheit 15 digital einem Demodulationsprozeß in Form einer Fouriertransformation unterworfen, bei dem aus dem empfangenen Signal, das mehrere Trägersignale aufweist, ein Trägersignal mit einer vorgegebenen Trägerfrequenz herausgefiltert wird. Dabei wird entsprechend dem in der Zeitmultiplexeinheit 3 verwendeten Zeitmultiplexverfahren in Form eines Zeitfensters die Symbole des Trägersignals, das zu decodieren ist, betrachtet. Jedes Symbol wird einer Fouriertransformation unterzogen. Die fouriertransformierten Signale werden einer Demodulation unterzogen und die Zeit- und Frequenzverwürfelung wird rückgängig gemacht. Anschließend werden die Signale von einem Kanaldecoder 8, der vorzugsweise als Soft-Viterbi-Decoder ausgebildet ist, kanaldecodiert und ausgegeben. Die fouriertransformierten Trägersignale werden gleichzeitig einer Recheneinheit 13 zugeführt. Von der Recheneinheit 13 wird durch eine Überprüfung des Synchronisationssymbols eine Frequenzabweichung $\Delta f$ zwischen dem Trägersignal und der vorgegebenen Oszillatorfrequenz, mit der die empfangenen Signale vom Mischer 10 frequenzverschoben werden, ermittelt. Aus der Frequenzabweichung $\Delta f$ werden Drehfaktoren berechnet, die der Fouriertransformationseinheit 15 zugeführt werden. Die Fouriertransformationseinheit 15 berücksichtigt bei weiteren Fouriertransformationen die neuen Drehfaktoren. Zur Ermittlung der Frequenzabweichung können auch andere Verfahren verwendet werden.

Im folgenden wird anhand der Figur 2 die diskrete Fouriertransformation und die Wirkung der Drehfaktoren näher erläutert. Die diskrete Fouriertransformation (DFT) einer Folge $X_k$ der Länge N, wobei N eine festgelegte Konstante, k und 1 Laufvariablen sind, die von Null bis N-1 laufen, ist gegeben durch:

$$X_l = \sum_{k=0}^{N-1} x_k \exp(-j2\pi kl/N), \quad l = 0, \ldots, N-1. \qquad (1)$$

Die Berechnung der DFT gemäß Formel 1 stellt den Demodulationsprozeß in einem Mehrträgerverfahren dar, falls die Unterträgerabstände aller Trägersignale gleich sind und falls ein rechteckförmiger Sendeimpuls verwendet wird. Dies gilt insbesondere für das Orthogonal-Frequency-Division-Multiplexing-Verfahren, das z.B. bei Alard "Principles of Modulation and Channel Coding for Digital Broadcasting for Mobile Receivers, EBU Technical Review 224, S. 168-189, 1987, beschrieben ist.

Die Realisierung eines Stellgliedes für die Frequenzregelung erfordert die Modulation des komplexen Basisbandsignales, das durch die Abtastwerte $x_k$ beschrieben ist. Für die Modulation wird ein komplexes Oszillatorsignal s verwendet, das durch die Abtastwerte $s_k$ beschrieben ist.

$$s_k = \exp(-j2\pi\rho k/N), \qquad k = 0, \dots, N - 1. \tag{2}$$

Hierbei ist $\rho$ die normalisierte Frequenzabweichung mit

$\rho = N\Delta f/F_c$ wobei $\Delta f$ die Frequenzabweichung des Oszillators 11 gegenüber der Trägerfrequenz des empfangenen Signals darstellt. Die Laufvariable k läuft von 0 bis N-1, wobei N eine festgelegte Konstante ist. $F_c$ ist die Abtastrate im komplexen Basisband, d.h. die Abtastrate des A/D-Wandlers 25. Die Frequenzabweichung $\Delta f$ wird im Empfänger durch die Auswertung des Synchronisationssymboles gewonnen. Die Abtastwerte des frequenzkorrigierten Basisbandsignales werden mit $\bar{x}_K$ bezeichnet und ergeben sich entsprechend den obigen Formeln durch $\bar{x}_k = s_k \cdot x_k$.

Die Grundidee des erfindungsgemäßen Verfahrens besteht darin, die Frequenzkorrektur mit der Berechnung der diskreten Fouriertransformation zu verbinden. Die Ausgangswerte der so modifizierten diskreten Fouriertransformation lauten nun

$$\tilde{X}_l = \sum_{k=0}^{N-1} x_k \exp(-j2\pi(l+\rho)k/N), \quad l = 0, \dots, N - 1. \tag{3}$$

wobei 1 eine Laufvariable darstellt, die von Null bis N-1 läuft. Verwendet man die Abkürzung

$$W_N = \exp(-j2\pi/N), \tag{4}$$

für Drehfaktoren der diskreten Fouriertransformation, so läßt sich die Formel 3 in folgender Weise darstellen:

$$\tilde{X}_l = \sum_{k=0}^{N-1} x_k W_N^{(l+\rho)k}, \quad l = 0, \dots, N - 1. \tag{5}$$

Die modifizierte diskrete Fouriertransformation, die zur Durchführung der Frequenzkorrektur nötig ist, unterscheidet sich demnach von der ursprünglichen diskreten Fouriertransformation nur in der Wahl der Drehfaktoren.

Vorzugsweise werden anstelle der in Formel 1 dargestellten diskreten Fouriertransformation schnelle Algorithmen verwendet. Es werden im folgenden schnelle Algorithmen angegeben, die sich auch für die modifizierte diskrete Fouriertransformation eignen.

Es wird das Beispiel der Radix 2 Fast Fouriertransformation betrachtet. Prinzipiell lassen sich die Überlegungen auch für andere schnelle Algorithmen zur Berechnung der Fast Fouriertransformation anwenden. Zur Verwendung eines Radix 2 Algorithmus ist es notwendig, daß N eine Zweierpotenz ist, also die Beziehung n = ld N für alle Elemente aus N gilt, wobei mit ld der Logarithmus zur Basis 2 bezeichnet ist. In diesem Fall läßt sich die Formel 5 in folgender Form darstellen:

$$\tilde{X}_l = \sum_{k=0}^{N'-1} x_{2k} W_{N'}^{(l+\rho)k} + W_N^{l+\rho} \sum_{k=0}^{N'-1} x_{2k+1} W_{N'}^{(l+\rho)k}, \quad l = 0, \dots, N' - 1 \tag{6}$$

Hierbei wurde zur Abkürzung N' = N/2 eingeführt. Die verbleibenden Trägeramplituden $X_1$ für 1 = N',...,N-1 lassen sich aus den bereits in Formel 6 berechneten Teilsummen durch folgende Gleichung:

$$\tilde{X}_{N'+l} = \sum_{k=0}^{N'-1} x_{2k} W_{N'}^{(l+\rho)k} - W_N^{l+\rho} \sum_{k=0}^{N'-1} x_{2k+1} W_{N'}^{(l+\rho)k}, \quad l = 0, \dots, N' - 1. \tag{7}$$

4

ermitteln. Die Gleichungen 6 und 7 stellen die Grundlagen für eine schnelle Berechnung der modifizierten diskreten Fouriertransformation dar. Durch eine wiederholte Anwendung dieser Beziehungen läßt sich die modifizierte diskrete Fouriertransformation der Länge N auf elementare Funktionen, sogenannte Butterflies, für die modifizierte diskrete Fouriertransformationen der Länge 2 zurückführen.

Entsprechende Algorithmen sind z.B. bei Brigham, "FFT - schnelle Fouriertransforntation", Oldenbourg, München, Wien, 1987 als Decimation-in-Time-Algorithmen beschrieben. Der Unterschied besteht lediglich in der anderen Wahl der verwendeten Drehfaktoren. Dies hat den großen Vorteil, daß bekannte Hardware zur Realisierung der Fast Fouriertransformation unmittelbar eingesetzt werden kann, vorausgesetzt, daß ein Zugriff auf die gespeicherten Drehfaktoren möglich ist.

Im folgenden wird eine effiziente Bestimmung der N-1 Drehfaktoren der modifizierten diskreten Fouriertransformation beschrieben. Zur Berechnung einer modifizierten diskreten Fouriertransformation der Länge N sind N-1 verschiedene Drehfaktoren notwendig, die durch die folgende Beziehung gegeben sind:

$$W_N^{(l+\rho)2^m} \qquad \text{für } m = 0,...,n - 1 \text{ und } l = 0,...,2^{n-m-1}-1. \tag{8}$$

Dabei stellt m eine Laufvariable dar. Da die Drehfaktoren unimodular sind, lassen sie sich auch durch entsprechende Phasenwinkel $\theta$ darstellen:

$$W_N^{(l+\rho)2m} = \exp(-j\theta_{l,m}) \qquad \text{mit } \theta_{l,m} = \frac{2\pi}{N}2^m (l + \rho). \tag{9}$$

Die verschiedenen Winkel lassen sich durch die folgenden Rekursionsbeziehungen effizient berechnen:

$$\theta_{l,m} = 2^m\theta_{l,0} \tag{10}$$

$$\theta_{l+1,0} = \theta_{l,0} + 2\pi/N \qquad \text{mod } 2\pi \tag{11}$$

$$\theta_{0,0} = 2\pi\rho/N \tag{12}$$

Bei einer Realisierung der modifizierten diskreten Fouriertransformation in einem Festkommaformat müssen die normalisierten Frequenzabweichungen diesem Format angepaßt werden. Geht man davon aus, daß zur Realisierung der Frequenzkorrektur eine Anzahl R Quantisierungsstufen zwischen zwei Trägersignalen ausreichend sind, so ist zur Darstellung dieser Zwischenstufen eine Wortbreite von r = 1dR Bit notwendig. Die Anzahl R sollte somit als Zweierpotenz vorgesehen werden. Bildet man die oben angegebenen Phasenwinkel $\theta$ auf ganze Zahlen gemäß der Beziehung

$$t = NR\theta/2\pi$$

ab, so erhält man die folgende Rekursionsvorschrift:

$$t_{l,m} = 2^m t_{l,0} \tag{14}$$

$$t_{l+1,0} = t_{l,0} + R \text{ mod} N\,R \tag{15}$$

$$t_{0,0} = [\rho R] \tag{16}$$

mit der eckigen Klammer ist ein Aufrunden auf den nächstliegenden ganzzahligen Wert dargestellt. Eine Realisierung dieser Beziehungen mittels eines n+r Bit breiten Akkumulators ist im Bild 3 dargestellt. Einem Eingang 36 wird ein Wert R zugeführt, der an einen Addierer 31 weitergegeben wird. Der Addierer 31 addiert den vom Eingang 36 zugeführten wert R mit einem von einem Verzögerungsglied 32 zugeführten Wert. Der Ausgang des Addierers 31 ist mit dem Eingang des Verzögerungsgliedes 32 verbunden. Zudem ist der Ausgang des Addierers 31 zu einem ersten Ausgabekanal 37 und zu einem Eingang eines ersten Multiplizierers 33 geführt. Der Ausgang des ersten Multiplizierers 33 ist mit einem Eingang eines zweiten Multiplizierers 34 und einem zweiten Ausgabekanal 38 verbunden. Der Ausgang des zweiten Multiplizierers 34 ist mit einem dritten Ausgabekanal 39 und mit einem weiteren Multiplizierer verbunden. Der m-te Multiplizierer 35 ist mit einem (m+1)ten Ausgabekanal 40 verbunden. Ein zweiter Eingang 41 des Zeitverzögerungsgliedes 32 ist mit einem Startwert belegt. Die ersten, zweiten, ..., und m-ten Multiplizierer 33, 34 und 35 führen jeweils eine Multiplikation mit dem Wert 2 durch. Die in Figur 3 dargestellte Schaltung wird auf n+r lange Datenworte angewendet. Das Zeitverzögerungsglied 32 führt eine zeitverzögerung um einen Zeitakt T durch, mit dem der Addierer 31 und die Multiplizierer 33, 34, 35 getaktet werden. Die Initialisierung 41 des Akkumulators erfolgt mit dem Wert [$\rho$R]. Man erkennt, daß die Frequenzabweichung ausschließlich in diese Initialisierung eingeht. Der Phasenakkumulator muß N/2 Takte durchlaufen, um alle benötigten Werte zu generieren. Multiplikationen mit 2 lassen sich als einfache Bit-Shift-Operationen realisieren. In einem nächsten Verarbeitungsschritt werden die n+r Bit breiten Worte t der Ausgabekanäle 37, 38, 39, 40 durch Abschneiden der n+r-1 niederwertigen Bits auf eine Wortlänge 1 gebracht. Die entsprechenden Werte werden im folgenden als $\bar{t}$ bezeichnet und dienen zur Adressierung einer Tabelle mit Werten von Kosinus- und Sinusfunktionen. Der Wertebereich von $\bar{t}$ ist $0,...,2^{v-1}$. Die modifizierten Drehfaktoren ergeben sich aus den Werten von t mittels

$$W_N^{(l+\rho)2^m} = \cos(2\pi\,\bar{t}_{l,m}/2^v) - j\sin(2\pi\,\bar{t}_{l,m}/2^v), \qquad (17)$$

so daß die Formel 17 eine Berechnungsvorschrift der Tabellenwerte in Abhängigkeit der Adressen $\bar{t}$ darstellt. Die Werte der Sinus- und Kosinusfunktion werden mit einer Wortlänge w im Speicher 14 abgelegt, die der Signalwortlänge entsprechen sollte. Die Adressenwortlänge 1 sollte größer als w sein. Gute Ergebnisse erzielt man mit v = w+4. In dieser Form der Realisierung benötigt man für die Tabelle $2^{v+1}$ Werte der Wortlänge w. Durch Ausnutzung der Symmetrien der Sinus- und Kosinusfunktionen läßt sich die Anzahl der Tabelleneinträge auf zwei $2^{v-1}$ Werte verringern, wie im folgenden gezeigt wird. Zunächst ist:

$$\sin(\theta) = \cos(\theta - \pi/2), \qquad (18)$$

so daß

$$\sin(2\pi\,\bar{t}_{l,m}/2^v) = \cos(2\pi\,(\bar{t}_{l,m} - 2^{v-2})/2^v) \qquad (19)$$

ist. Des weiteren ist

$$\cos(\theta - \pi) = -\cos(\theta) \qquad (20)$$

und damit

$$\cos(2\pi\,\bar{t}_{l,m}/2^v) = -\cos(2\pi\,(\bar{t}_{l,m} - 2^{v-1})/2^v). \qquad (21)$$

Durch diese Anordnung wird erreicht, daß insgesamt lediglich eine Tabelle der Kosinusfunktione mit $2^{v-1}$ Werten der Wortlänge w benötigt wird. Die Kosinusfunktionen sind im Speicher 14 abgelegt und werden von der Recheneinheit 13 über die $\bar{t}$ -Werte, die die Adressen der zugehörenden Kosinuswerte darstellen, aufgerufen. Die Adressen werden auf einfache Weise mithilfe des in Fingur 3 dargestellten Verfahrens unter Verwendung des Akkumulators ermittelt. Auf diese Weise sind die benötigten Drehfaktoren sehr schnell auffindbar.

Das erfindungsgemäße Verfahren wird vorzugsweise beim Empfang eines digitalen Rundfunkprogrammes (DAB) eingesetzt.

**Patentansprüche**

1. Verfahren zur Frequenzkorrektur bei Mehrträgerübertragungsverfahren, wobei ein Mehrträgersignal einer Bandpaßfilterung (9) unterzogen wird und anschließend über eine Frequenzmischung (10) mit einer vorgegebenen Frequenz in einen Bandpaßbereich verschoben wird, wobei daraufhin eine digitale Fouriertransformation (15) durchgeführt wird und das fouriertransformierte Signal (20) anschließend einer Kanaldecodierung (8) unterzogen wird, wobei aus dem fouriertransformierten Signal (20) eine Frequenzabweichung ($\Delta$f) zwischen einem Trägersignal und der Frequenz, die für die Frequenzmischung (10) verwendet wird, ermittelt wird, **dadurch gekennzeichnet, daß** aus der ermittelten Frequenzabweichung ($\Delta$f) Drehfaktoren ($W_N$) für eine modifizierte Fouriertransformation (15) berechnet werden, so daß durch die modifizierte Fouriertransformation (15) die Frequenzabweichung ($\Delta$f) zwischen dem Trägersignal und der Frequenz, die für die Frequenzmischung (10) verwendet wird, ausgleichbar ist.

2. Verfahren nach Anspruch 1, **dadurch gekennzeichnet, daß** zur Berechnung der modifizierten Fouriertransformation (15) ein schneller Algorithmus verwendet wird.

3. Verfahren nach einem der Ansprüche 1 oder 2, **dadurch gekennzeichnet, daß** die Drehfaktoren ($W_N$) zur Modifizierung der Fouriertransformation (15) aus einer Tabelle ausgelesen werden.

4. Verfahren nach Anspruch 3, **dadurch gekennzeichnet, daß** Adressen, unter denen die Drehfaktoren ($W_N$) in der Tabelle abgespeichert sind, mit Hilfe eines Akkumulators ermittelt werden.

5. Verfahren nach einem der Ansprüche 1 bis 4, **dadurch gekennzeichnet, daß** die Frequenzkorrektur mittels der modifizierten Fouriertransformation (15) beim Empfang eines digitalen Rundfunkes eingesetzt wird.

**Claims**

1. Method for frequency correction for multicarrier transmission methods, with a multicarrier signal being subjected to bandpass filtering (9) and then being shifted via frequency mixing (10) with a predetermined frequency to a bandpass area, with a digital Fourier transformation (15) then being carried out and the Fourier-transformed signal (20) then being subjected to channel decoding (8), with a frequency error ($\Delta$f) between a carrier signal and the frequency which is used for frequency mixing (10) being determined from the Fourier-transformed signal (20), **characterized in that** rotation factors ($W_N$) for a modified Fourier transformation (15) are calculated from the determined frequency error ($\Delta$f), so that the frequency error ($\Delta$f) between the carrier signal and the frequency which is used for the frequency mixing (10) can be compensated for by the modified Fourier transformation (15).

2. Method according to Claim 1, **characterized in that** a fast algorithm is used to calculate the modified Fourier transformation (15).

3. Method according to one of Claims 1 or 2, **characterized in that** the rotation factors ($W_N$) for modification of the Fourier transformation (15) are read from a table.

4. Method according to Claim 3, **characterized in that** addresses at which the rotation factors ($W_N$) are stored in the table are determined with the aid of an accumulator.

5. Method according to one of Claims 1 to 4, **characterized in that** the frequency correction by means of the modified Fourier transformation (15) is used for reception of digital broadcast radio.

**Revendications**

1. Procédé destiné à corriger la fréquence dans des procédés de transmission à porteuses multiples, selon lequel un signal de porteuses multiples est soumis à un filtrage passe-bande (9) puis est décalé dans une gamme passe-bande par l'intermédiaire d'un mélange de fréquences (10) à fréquence prédéterminée, on réalise ensuite une transformation de Fourier (15) numérique et le signal (20) obtenu par transformation de Fourier est ensuite soumis à un décodage de canal (8), en déterminant à partir du signal (20) obtenu par transformation de Fourier une variation de fréquence ($\Delta$f) entre un signal de porteuse et la fréquence qu'on utilise pour le mélange de fréquences (10),
**caractérisé en ce qu'**
à partir de la variation de fréquence ($\Delta f$) déterminée établie, on calcule, des facteurs de rotation ($W_N$) pour une transformation de Fourier (15) modifiée, de sorte que la variation de fréquence ($\Delta f$) entre le signal de porteuse et la fréquence qu'on utilise pour le mélange de fréquences (10) peut être compensée par la transformation de Fourier (15) modifiée.

2. Procédé selon la revendication 1,
   **caractérisé en ce que**
   pour calculer la transformation de Fourier (15) modifiée, on utilise un algorithme rapide

3. Procédé selon l'une des revendications 1 ou 2,
   **caractérisé en ce que**
   les facteurs de rotation ($W_N$) destinés à modifier la transformation de Fourier (15) sont extraits d'une table.

4. Procédé selon la revendication 3,
   **caractérisé en ce que**
   des adresses sous lesquelles les facteurs de rotation ($W_N$) sont mémorisés dans la table sont établies à l'aide d'un accumulateur.

5. Procédé selon l'une des revendications 1 à 4,
   **caractérisé en ce que**
   pour recevoir une radiodiffusion numérique, on utilise la correction de fréquence à l'aide de la transformation de Fourier (15) modifiée.

# Fig. 1

# Fig. 2

# Fig. 3

$t_{0,0} = (pR)$